# NEUE EUROPÄISCHE PATENTSCHRIFT

(11) **EP 0 338 511 B2**
(45) Veröffentlichungstag und Bekanntmachung des Hinweises auf die Entscheidung über den Einspruch: **29.05.1996**
(45) Hinweis auf die Patenterteilung: 09.02.1994
(21) Anmeldenummer: 89106937.9
(22) Anmeldetag: 18.04.1989
(51) Int. Cl.: B29C 43/24, B29C 55/06, B29C 59/02

(54) **Verfahren zur Herstellung von Folien aus linearem Polyethylen sehr niedriger Dichte**
Method for the production of linear very-low-density polyethylene foil
Procédé pour la fabrication de feuilles en polyéthylène de très basse densité

(30) Priorität: 19.04.1988 DE 3813085
(43) Veröffentlichungstag der Anmeldung: 25.10.1989
(73) Patentinhaber: ELASTONWERK BAYERN GMBH, D-84478 Waldkraiburg (DE)
(72) Erfinder: Stautner, Hans, Dipl.-Ing.(FH), D-8090 Reitmehring (DE)
(74) Vertreter: Patentanwälte Zellentin & Partner

(56) Entgegenhaltungen:
- AT-C- 211 040
- DE-C- 3 039 186
- H. BATZER: "Polymer Werkstoffe", Band II "Technologie 1", 1984, Seiten 148-154,Georg Thieme Verlag, Stuttgart, DE
- H. Kopsch, Kalandertechnik, 1. Auflage 1978, Seiten 118, 119 und 148 bis 153
- G. Schulz, Die Kunststoffe, 2. Auflage 1964, Seiten 352 bis 355
- "Versatile VLDPEs offer impressive property range for processors", Modern Plastics International, Febr. 1987, Seiten 35 und 35
- "LLDPE, VLDPE and polar polyethylene markets and economics", Speciality Plastics Conference 1986, Maack Business Services

## Beschreibung

Die vorliegende Erfindung betrifft die Herstellung von Folien aus linearem Polyethylen sehr niedriger Dichte (VLDPE) durch Kalandrieren. Für die Herstellung von Folien für eine Reihe von Anwendungsgebieten, insbesondere für solche, die zur Herstellung von Gebrauchsartikeln mit ansprechendem Äußeren vorgesehen sind, ist das Kalandrieren nach wie vor jenes Verfahren, das den höchsten Qualitätsansprüchen genügt. Hierunter sind übliche Kalandrierverfahren zu verstehen, die mit mindestens zwei, vorzugsweise mehr als zwei Walzen arbeiten, auf denen eine Folie geformt wird, die in einer sogenannten Nachvollstreckung auf die endgültige Folienstärke gebracht wird. Als Ausgangsmaterial dient zum Großteil PVC, das trotz seiner geringen Umweltverträglichkeit nach wie vor nicht ersetzt werden kann. Die Gründe dafür liegen einerseits in der sonst unerreicht guten Verarbeitbarkeit und lückenlos einstellbaren Weichheit sowie im ansprechenden Äußeren von diesen PVC-Folien,das mit anderen Materialien nicht erzielbar ist und andererseits in der Tatsache, daß Kalanderverfahren bei anderen Kunststoffen, wie z.B. Polyolefinen bei weitem mehr mit Problemen belastet sind.

Vor einiger Zeit wurde ein neues lineares Polyethylen bekannt, bei dem durch entsprechende Wahl und Menge an alpha-Olefincomonomeren eine Dichte unterhalb jener von LLDPE, nämlich von 0,900 bis 0,915 g/cm³, eingestellt ist (VLDPE, siehe z.B. "VLDPE, a new class of polyethylene, Plastics and Rubber International 1986, Vol. 11, No 2).

Später wurden ähnliche Polymere sogar herunter bis zu einer Dichte von 0,870 bekannt. Auf Grund des höheren Gehaltes an Comonomeren besitzt VLDPE einen geringeren krisallinen Charakter als LLDPE. Seine enge Molekulargewichtsverteilung, die verminderte Bildung kristalliner Regionen und die Unpolarität führen u.a. zu einem Schmelzpunkt von rund 115°C, einer hohen Zugfestigkeit, einer geringeren Sprödigkeit und einer höheren Flexibilität als bei LLDPE. Kennzeichnend für VLDPE ist auf der anderen Seite auch eine höhere Viskosität im geschmolzenen Zustand, eine erhöhte Haftfähigkeit, die bei Folien zum Kleben bzw. "Blocken" führt, eine geringere Durchsichtklarheit von daraus hergestellten Folien, sowie ein wachsartiger Griff.

VLDPE wird in erster Linie zur Verarbeitung ausgehend vom geschmolzenen Zustand wie Spritzguß und Extrusion, letztere auch zur Herstellung von Folien empfohlen, wobei die Verwendung von Gleit- oder Antiblockmitteln im Falle der Folienherstellung als erforderlich bezeichnet wird, um eine Beschädigung der Folienoberfläche bei der Trennung zu vermeiden bzw. um überhaupt in der Lage zu sein, Folien von umfangreichen Folienwickeln, wie sie üblicherweise bei der Herstellung in größerem Maßstab erzeugt werden, wieder abwickeln zu können.

Es zeigte sich nun, daß Folien aus VLDPE, insbesondere solche, die keine Gleit- oder Antiblockmittel enthalten, was überraschenderweise dann möglich ist, wenn sie unmittelbar nach der Herstellung an der Oberfläche geprägt werden, sowohl in der einwandfreien Beschaffenheit der Oberfläche als auch im Griff und in der Duktilität Folien aus Weich-PVC voll entsprechen und sich daher als idealer Ersatz für Weich-PVC darstellen, was aus Umweltgründen äußerst vorteilhaft wäre.

Eine Voraussetzung dafür, daß die Verwendung von VLDPE-Folien anstelle von Folien aus Weich-PVC tatsächlich zum Druchbruch kommt, ist allerdings, daß VLDPE-Folien ebenso problemlos durch Kalanderverfahren herstellbar sein müssen wie Folien aus Weich-PVC und daß dazu auch bestehende für die Verarbeitung von Weich-PVC konzipierte Einrichtungen angewendet werden können.

Bei Versuchen, VLDPE am Kalander zu Folien zu verarbeiten, stellte sich jedoch heraus, daß VLDPE unter gewissen Bedingungen, vor allem bei höheren Temperaturen stark zum Kleben an den Walzen neigt und daß außerdem häufig keine glatte Oberfläche zu erzielen ist, sondern Risse (Schmelzbruch) die Folien unverwertbar machen.

Überraschenderweise konnte nun gefunden werden, daß sowohl das Kleben als auch die Risse an der Oberfläche beseitigt werden können und sich VLDPE problemlos und einwandfrei auch auf Kalandereinrichtungen, die für PVC konzipiert sind und die mit einer Nachverstreckung arbeiten, verarbeiten läßt, wenn bei der Verarbeitung 190°C nicht überschritten werden und ein zu starkes Ansteigen der Spaltlast dadurch vermieden wird, daß der Durchsatz in der Zeiteinheit bezogen auf den Folienquerschnitt auf der letzten Kalanderwalze unter einer bestimmten Obergrenze gehalten wird.

Gegenstand der vorliegenden Erfindung ist demnach ein Verfahren zur Herstellung von Folien aus linearem Polyethylen sehr niedriger Dichte (VLDPE) durch Kalandrieren mit der letzten Kalanderwalze folgender Nachverstreckung, das dadurch gekennzeichnet ist, daß lineares Polyethylen einer Dichte von 0,900 - 0,915 g/cm³ im schmelzflüssigen Zustand, jedoch bei einer Temperatur von 175 - 190°C, bei niedriger Spaltlast erzielt durch einen maximalen Durchsatz von 90,3 kg pro Stunde und cm² Folienquerschnitt auf der letzten Kalanderwalze bei 100 µm Stärke der Endfolie, von 135 kg pro Stunde und cm² Folienquerschnitt auf der letzten Kalanderwalze bei 300 µm und mehr Stärke der Endfolie bzw. dazwischenliegenden Durchsatzwerten bei Endfolien einer Stärke zwischen 100 und 300 µm, zu Folien verarbeitet wird, die nach Verlassen des letzten Spaltes des Kalandars in der Nachverstreckung mit gegenüber der Walzengeschwindigkeit der letzten Kalanderwalze ummindestens einen Faktor 2 erhöhter Geschwindigkeit abgezogen werden, wobei die Voreilung der Abzugsgeschwindigkeit gegenüber der letzten Kalanderwalze mit zunehmender Annäherung des Durchsatzes an seine Obergrenzen zu erhöhen ist.

Voraussetzung für das Gelingen des erfindungsgemäßen Verfahrens ist demnach, daß durch den nach oben begrenzten Durchsatz pro Zeiteinheit und Fläche des Querschnittes der Folie auf der letzten Kalanderwalze die Menge an Material, das den letzten Spalt zu passieren hat, begrenzt ist und daher nicht zu viel Material durchgequetscht wird, sodaß die Schwerkräfte, denen das Material beim Passieren des Spalts zwischen den Walzen unterworfen wird, in Grenzen gehalten werden. Daß dabei die Menge des durchgesetzten Materials auf die Querschnittsfläche der Folie auf der letzten Kalanderwalze und nicht auf die Querschnittsfläche des Spalts bezogen ist, ist lediglich darauf zurückzuführen, daß die Querschnittsfläche der Folie exakter bestimmbar ist, als die Querschnittsfläche des Spalts. Da die Folie nach Verlassen des Spalts einer Quellung unterliegt, ist die Fläche des Folienquerschnitts nicht identisch mit dem Querschnitt des Spaltes selbst. Das heißt, hat z.B. die Folie auf der letzten Kalanderwalze eine Stärke von 500 µm, bedeutet das, daß die Höhe des Spaltes wesentlich niedriger ist, manchmal sogar nur bei einem Drittel der Folie nach der Quellung liegt. Die noch tolerierbaren Werte für den Durchsatz pro Stunde und cm²Querschnitt der Folie auf der letzten Kalanderwalze variieren mit der Stärke der Folie, die erzeugt werden soll.

Je dünner die Folie endgültig sein soll, desto geringer ist der maximale Durchsatz, bei dem noch Folien mit einwandfreier Oberfläche erzeugt werden können. Daher wird erfindungsgemäß ein Bereich für den maximal einzuhaltenden Durchsatz angegeben, der durch die Maximalwerte für die Erzeugung von 100 µm-Folien und 300 µm-Folien gekennzeichnet ist. Die Kennzeichnung ist erfindungsgemäß so zu verstehen, daß sich die Durchsatzwerte zwischen den gegebenen Grenzen mit der Stärke der Endfolie etwa linear verändern, bzw. daß sie für die Erzeugung von Folien unter 100 µm entsprechend verringert werden müssen bzw. sich für die Erzeugung von Folien über 300 µm entsprechend erhöhen.

Ferner sind die gegebenen Grenzwerte so zu verstehen, daß nur dann mit diesem maximalen Durchsatz, Folien mit einwandfreier Oberfläche erhalten werden, wenn das Verfahren so geführt wird, daß mit der größtmöglichen Spalthöhe gearbeitet wird, während bei niedrigeren Spalthöhen bereits keine brauchbaren Folien mehr erhalten werden. Eine größtmögliche Spalthöhe ist dann gegeben, wenn möglichst viel jener Stärkenreduktion der Folie, die zu der gewünschten Endstärke der Folie führt, mittels der nach der letzten Kalanderwalze folgenden Nachverstreckung erzielt wird. Das bedeutet, daß in diesem Fall die Abzugswalze mit der am höchsten tolerierbaren Voreilung vor der letzten Kalanderwalze betrieben werden muß.

In der Praxis hat es sich bewährt, mit Durchschnittswerten innerhalb der erfindungsgemäß definierten Obergrenze zu fahren. Es ist jedoch zu bedenken, daß ein niedriger Durchsatz auf Kosten der Produktivität des Verfahrens geht. Daher ist es zweckmäßig beim erfindungsgemäßen Verfahren mit höherer Nachverstreckung bzw. mit einer größeren Voreilung der Abzugsgeschwindigkeit gegenüber der letzten Kalanderwalze zu fahren. Bevorzugt ist es, mindestens die Hälfte der Reduktion der Folienstärke, die zur Erreichung der Endstärke der Folie nötig ist, über die Nachverstreckung durchzuführen.

So ist es z.B. besonders bevorzugt, zur Erzeugung einer Folie einer Endstärke von 200 µm mit einem erfindungsgemäß definierten Durchsatz von maximal 103 kg pro Stunde und cm² zu fahren, wobei die Voreilung der Abzugsgeschwindigkeit mindestens 1 : 2, aus wirtschaftlichen Gründen, vorzugsweise aber mehr betragen soll.

Dies wird völlig klar, wenn man bedenkt, daß die Verwendung einer Abzugsgeschwindigkeit von 1 : 4 anstelle von 1 : 2 bei gleichbleibender Kalanderwalzengeschwindigkeit und gleichbleibendem Durchsatz pro Zeiteinheit und Flächeneinheit bedeutet, daß der Spalt doppelt so hoch sein muß, um diese gewünschte Endstärke beizubehalten, was einer Verdoppelung der Produktivität entspricht.

Bei der Herstellung von 100 µm-Folien liegt der bevorzugte max. erfindungsgemäße Durchsatz bei 80 kg/h und cm², für die Herstellung von Folien einer Stärke von 300 µm bei 120 kg/h und cm², wobei hinsichtlich des zu wählenden Abzugsverhältnisses das,was für den Fall der Erzeugung von 200 µm-Folien ausgeführt wurde, auch bei den 100 µm und 300 µm-Folien in gleicher Weise gilt. Da die genauen Parameter je nach Kunststofftyp und Kalander Schwankungen unterliegen können, kann es erforderlich sein, die Bedingungen in der Praxis dem jeweiligen eintretenden Anwendungsfall anzupassen. Dies ist für jeden Fachmann ohne jede Schwierigkeit möglich. Wird nämlich beobachtet, daß bei einer bestimmten Fahrweise Risse an der Oberfläche, die auf einen Schmelzbruch zurückzuführen sind, auftreten, ist es nur erforderlich die Geschwindigkeit der Kalanderwalzen zu erniedrigen, was gleichbedeutend mit einer Erniedrigung des erfindungsgemäß definierten Durchsatzes ist. Um die Produktivität dadurch nicht zu verringern, muß der letzte Spalt zwischen den Kalanderwalzen in entsprechendem Maß größer eingestellt werden. Beide Maßnahmen bedingen eine Verringerung der Spaltlast. Damit die Endfolienstärke beibehalten wird, muß ferner die Abzugsgeschwindigkeit erhöht werden. Diese Maßnahmen sind solange festzusetzen, bis die Oberfläche der Folie einwandfrei ist.

Das für das erfindungsgemäße Verfahren eingesetzte VLDPE einer Dichte von 0,900 - 0,915 g/cm³ kann die üblichen Zusätze wie Gleitmittel, Antiblockmittel und/oder antistatisch wirkende Zusätze enthalten. Diese Zusätze geben allerdings häufig Anlaß zu störenden Ablagerungen an der Oberfläche, die bei Folien für technische Zwecke teilweise belanglos sind, die aber bei der Anwendung solcher Folien für dekorative Zwecke, z.B. für die Herstellung von Buchhüllen, Überzügen von Aktenordnern und dergleichen, vor allem dann, wenn sie eingefärbt sind, nicht akzeptiert werden können.

Dieser Nachteil kann jedoch dadurch vermieden werden, daß für das erfingungsgemäße Verfahren VLDPE ohne die genannten Zusätze eingesetzt wird, wobei sich gezeigt hat, daß die unangenehm starke Neigung von VLDPE-Folien zum Blocken dann nicht zum Tragen kommt, wenn die Folienoberfläche noch vor dem ersten Aufwickeln einer Oberflächenprägung unterzogen wird. Falls gewünscht, kann das als Ausgangsmaterial verwendete VLDPE auch Füllstoffe enthalten.

Für die Durchführung des erfindungsgemäßen Verfahrens ist die Anwendung von Mehrwalzenkalandern, beispielsweise von solchen mit 4 oder 5 Walzen jeder Art der Anordnung untereinander bevorzugt. Es können aber auch Einrichtungen mit nur zwei Walzen für die Durchführung des erfindungsgemäßen Verfahrens eingesetzt werden, wobei naturgemäß mit hohen Graden an Nachverstreckung gearbeitet wird.

### Beispiel 1:

VLDPE einer Dichte von 0,910 g/cm³, einem Schmelzindex von 1g/10 min (190°C, 2,16 kg Belastung) und eines Vicaterweichungspunktes von 87°C wird zunächst in einem Kokneter aufgeschlossen und auf einem beheizten Walzenpaar zu einem Fell verarbeitet, das dann in Streifen auf einen 4-Walzenkalander mit Walzenanordnung in L-Form aufgegeben wird. Die Walzentemperatur des Kalanders beträgt 175°, 175°, 182° und 175°C, die Walzengeschwindigkeiten der einzelnen Walzen betragen 13,0, 14,0, 17,0 und 19,4 m/min, die dabei erzeugte Folie ist 1,30 m breit und hat an der 4. Kalanderwalze eine Stärke von 346 µm. Der Durchsatz pro cm² Folienquerschnitt auf der 4. Kalanderwalze und Stunde beträgt 105,0 kg. Diese Folie wird mit einer Voreilung der Abzugsgeschwindigkeit von 1:1,73 abgezogen, wobei eine Endfolie von 200 µm Stärke erhalten wird, die anschließend durch eine Prägevorrichtung mit einem Matteffekt versehen und aufgewickelt wird. Sie besitzt vor der Prüfung eine glatte Oberfläche.

Werden hingegen bei sonst gleichen Bedingungen die Walzengeschwindigkeiten auf 12,9 m/min, 13,9 m/min, 17,7 m/min und 21,4 m/min erhöht, wodurch der Durchsatz auf 116,7 kg pro Stunde und cm² Folienquerschnitt auf der vierten Kalanderwalze gesteigert wird und wird die Folie mit einer Geschwindigkeit von 37 m/min abgezogen, was ebenfalls einer Voreilung von 1:1,73 entspricht, ist die Oberfläche der Folie aufgerissen und die Folie unverwertbar.

### Beispiel 2:

Aus dem gleichen VLDPE wie in Beispiel 1 verwendet, wird wie ebenfalls dort beschrieben ein Fell erzeugt, das dem gleichen 4-Walzenkalander, dessen Walzen auf den in Beispiel 1 angegebenen Temperaturen gehalten werden, aufgegeben wird. Die Walzengeschwindigkeiten betragen 14 m/min, 15,5 m/min, 18,5 m/min und 20,5 m/min, die Folie hat auf der 4. Kalanderwalze eine Stärke von 525 µm, der Durchsatz beträgt 111,8 kg pro Stunde und cm² Folienquerschnitt auf der 4. Kalanderwalze.

Zur Erzeugung einer Folie einer Endstärke von 200 µm, wird von der 4. Kalanderwalze mit einer Geschwindigkeit von 51,2 m/min abgezogen, entsprechend einer Voreilung von 1:2,5. Die Folie hat eine glatte Oberfläche. Sie wird wie in Beispiel 1 weiter behandelt.

Werden hingegen die Walzengeschwindigkeiten auf 16,5 m/min, 18,5 m/min, 20,5 m/min und 22,5 m/min bei Beibehaltung der Folienstärke auf der 4. Walze von 525 µm erhöht, wodurch der Durchsatz auf 122,6 kg pro Stunde und cm² Querschnitt der Folie auf der 4. Kalanderwalze gesteigert wird, wird bei Beibehaltung einer Voreilung der Abzugsgeschwindigkeit von 1:2,5 eine unverwertbare Folie mit rissiger Oberfläche erhalten.

### Beispiel 3:

Wird hingegen der VLDPE, wie in Beispiel 1 verwendet, auf dem gleichen Kalander und bei gleicher Walzentemperatur wie in Beispiel 1 bei Walzengeschwindigkeiten von 17,5 m/min, 19,5 m/min, 21,5 m/min und 23,0 m/min zu einer Folie auf der 4. Kalanderwalze von 840 µm verarbeitet, was einem Durchsatz von 125,7 kg pro Stunde und cm² Folienquerschnitt auf der 4. Walze entspricht, so wird bei einer Voreilung der Abzugsgeschwindigkeit von 1:4 eine Folie mit glatter einwandfreier Oberfläche erhalten.

### Beispiel 4:

VLDPE, wie in Beispiel 1 verwendet, wird wie in Beispiel 1 beschrieben zu Folien von 200 µm verarbeitet, wobei die Walzengeschwindigkeiten 12,5 m/min, 13,5 m/min, 16,5 m/min und 18,5 m/min, die Stärke der Folie an der 4. Kalanderwalze 551 µm, der Durchsatz 103,0 kg pro Stunde und cm² Querschnitt der Folie auf der 4. Walze und die Voreilung der Abzugsgeschwindigkeit 1:2 betragen. Die Folie besitzt eine glatte einwandfreie Oberfläche.

### Beispiel 5:

VLDPE, wie in Beispiel 1 beschrieben, wird wie in Beispiel 1 angegeben zu einer 100 µm Folie verarbeitet, wobei die Walzengeschwindigkeiten 7,0 m/min, 8,0 m/min, 10,0 m/min und 13,0 m/min, die Stärke der Folie an der 4. Kalanderwalze 296 µm, der Durchsatz 70,9 kg pro Stunde und cm² Folienquerschnitt an der 4. Kalanderwalze und die Voreilung der Abzugsgeschwindigkeit 1:2,69 betragen. Die Folie behält eine glatte einwandfreie Oberfläche. Die Produktivität beträgt 273 kg/Stunde. Wird bei gleichen Walzengeschwindigkeiten der Spalt zwischen 3. und 4. Walze soweit geöffnet, daß die Folie an der 4. Kalanderwalze eine Stärke von 506 µm besitzt und wird diese mit einer Voreilung der Abzugsgeschwindigkeit von 1:4,22 abgezogen, so ist die Folienoberfläche trotz Erhöhung des Durchsatzes auf 71,1 kg pro Stunde und cm² glatt.
Die Produktivität erhöht sich aber auf 468 kg Folie/Stunde verglichen mit 273 kg/Stunde im oben genannten Fall. Werden hingegen die Walzengeschwindigkeiten auf 13,5 m/min, 14,5 m/min, 16,5 m/min und 19,5 m/min bei einer Folienstärke auf der 4. Kalanderwalze von 367 µm erhöht, und wird damit der Durchsatz auf 106,2 kg pro Stunde und cm² Folienquerschnitt an der 4. Kalanderwalze angehoben, erhält man bei einem Abzugsverhältnis von 1:2,82 eine Folie mit aufgerissener Oberfläche.
Werden hingegen die Walzengeschwindigkeiten auf 10,5 m/min, 11,5 m/min, 14,5 m/min und 16,5 m/min und die Folienstärke auf der 4. Kalanderwalze auf 363 µm eingestellt, wodurch sich ein Durchsatz von 90,9 kg pro Stunde und cm² Folienquerschnitt auf der 4. Kalanderwalze ergibt, erhält man bei einem Abzugsverhältnis von 1:3,3 eine Folie, an der bei Durchsicht Wellenbildung zu erkennen ist, was als beginnende Störung der Oberflächenbeschaffenheit anzusehen ist.

### Beispiel 6:

VLDPE, wie in Beispiel 1 beschrieben, wird wie in Beispiel 1 angegeben zu einer Folie von 300 µm Stärke verarbeitet, wobei die Walzengeschwindigkeiten 14,0 m/min, 16,0 m/min, 18,0 m/min und 20,0 m/min, die Stärke der Folie auf der 4. Kalanderwalze 630 µm, der Durchsatz 109,0 kg pro Stunde und cm² Folienquerschnitt auf der 4.Kalanderwalze und die Voreilung der Abzugsgeschwindigkeit 1:2 betragen. Die Folie besitzt eine glatte einwandfreie Oberfläche.

Werden die Walzengeschwindigkeiten auf 18,0 m/min, 20,0 m/min, 22,0 m/min und 24,0 m/min gesteigert und gleichzeitig die Stärke der Folie auf der 4. Kalanderwalze auf 481 µm gesenkt, was einem Durchsatz von 130,9 kg pro Stunde und cm² Querschnitt der Folie an der 4. Kalanderwalze entspricht, und wird die Folie mit einer Voreilung der Abzugsgeschwindigkeit von 1:1,75 abgezogen, erhält man eine Folie mit aufgerissener Oberfläche.

## Patentansprüche

1. Verfahren zur Herstellung von Folien aus linearem Polyethylen sehr niedriger Dichte (VLPDE) durch Kalandrieren mit der letzten Kalanderwalze folgender Nachverstreckung, dadurch gekennzeichnet, daß lineares Polyethylen einer Dichte von 0,900 - 0,915 g/cm³ im schmelzflüssigen Zustand, jedoch bei einer Temperatur 175 - 190°C bei niedriger Spaltlast, erzielt durch einen maximalen Durchsatz von 90.3 kg pro Stunde und cm² Folienquerschnitt auf der letzten Kalenderwalze bei 100 µm Stärke der Endfolie,von 135 kg pro Stunde und cm² Folienquerschnitt auf der letzten Kalanderwalze bei 300 µm und mehr Stärke der Endfolie bzw. bei dazwischenliegenden Durchsatzwerten bei Endfolien einer Stärke zwischen 100 und 300 µm, zu Folien verarbeitet wird, die nach Verlassen des letzten Spaltes des Kalanders in der Nachverstreckung mit gegenüber der Walzengeschwindigkeit der letzten Kalanderwalze ummindestens einen Faktor 2 erhöhter Geschwindigkeit abgezogen werden, wobei die Voreilung der Abzugsgeschwindigkeit gegenüber der letzten Kalanderwalze mit zunehmender Annäherung des Durchsatzes an seine Obergrenzen zu erhöhen ist.

2. Verfahren nach Anspruch 1, dadurch gekennzeichnet, daß mindestens die Hälfte der für die Erreichung der gewünschten Endfolienstärken nötigen Dickenreduktion der Folie durch das Maß der Voreilung der Abzugsgeschwindigkeit gegenüber der letzten Kalanderwalze erzielt wird.

3. Verfahren nach Anspruch 2, dadurch gekennzeichnet, daß zur Herstellung einer Folie einer Endstärke von 200 µm bei einem Durchsatz von maximal 103 kg pro Stunde und cm² Folienquerschnitt auf der letzten Kalanderwalze gearbeitet wird, wobei durch Erhöhung der Voreilung der Abzugsgeschwindigkeit bei gleichbleibender Kalanderwalzengeschwindigkeit über den Wert von 1:2 hinaus die Produktivität erhöht wird.

4. Verfahren nach Anspruch 2, dadurch gekennzeichnet, daß zur Herstellung einer Folie einer Endstärke von 100 µm bei einem Durchsatz von maximal 80 kg pro Stunde und cm² Folienquerschnitt auf der letzten Kalanderwalze gearbeitet wird, wobei durch Erhöhung der Voreilung der Abzugsgeschwindigkeit bei gleichbleibender Kalanderwalzengeschwindigkeit über einen Wert von 1:2 hinaus die Produktivität erhöht wird.

5. Verfahren nach Anspruch 2, dadurch gekennzeichnet, daß zur Herstellung einer Folie einer Endstärke von 300 µm bei einem Durchsatz von maximal 120 kg pro Stunde und cm² Folienquerschnitt auf der letzten Kalanderwalze gearbeitet wird, wobei durch Erhöhung der Voreilung der Abzugsgeschwindigkeit bei gleichbleibender Kalanderwalzengeschwindigkeit über den Wert von 1:2 hinaus die Produktivität erhöht wird.

6. Verfahren nach den Ansprüchen 2 bis 5, dadurch gekennzeichnet, daß eine Voreilung der Abzugsgeschwindigkeit von 1:2,5 bis 1:4 eingestellt wird.

## Claims

1. Process for the production of films from linear polyethylene of very low density (VLDPE) by calendering with post-stretching following the last calender roller, characterised in that linear polyethylene of a density of 0.900 - 0.915 g/cm³ is worked up to films in a molten liquid state but at a temperature of 175 - 190°C in the case of low stress load, achieved by a maximum throughput of 90.3 kg per hour and cm² film cross-section on the last calender roller in the case of 100 µm thicknes of the end film, of 135 kg per hour and cm² film cross-section on the last calender roller in the case of 300 µm and more thickness of the end film or in the case of intermediate-lying throughput values in the case of end films of a thickness between 100 and 300 µm, which, after leaving the last gap of the calender, is drawn off in the post-stretching with speed increased in comparison with the roller speed of the last calender roller at least by a factor of 2, whereby the advance of the withdrawal speed in comparison with the last calender roller is to be increased with increasing approximation of the throughput to its upper limits.

2. Process according to claim 1, characterised in that at least half of the thickness reduction of the film needed for the achievement of the desired end film thickness is achieved by the extent of the advance of the withdrawal speed in comparison with the last calender roller.

3. Process according to claim 2, characterised in that, for the production of a film of an end thickness of 200 µm, one works at a throughput maximum of 103 kg per hour and cm² film cross-section on the last calender roller, whereby the productivity is increased by increase of the advance of the withdrawal speed above the value of 1:2 in the case of the calender roller speed remaining the same.

4. Process according to claim 2, characterised in that, for the production of a film of an end thickness of 100 µm, one works at a throughput of maximum 80 kg per hour and cm² film cross-section on the last calender roller, whereby the productivity is increased by an increase of the advance of the withdrawal speed above the value of 1:2 in the case of calender roller speed remaining the same.

5. Process according to claim 2, characterised in that, for the production of a film of an end thickness of 300 µm, one works at a throughput of maximum 120 kg per hour and cm² film cross-section on the last calender roller, whereby the productivity is increased by increase of the advance of the withdrawal speed above a value of 1:2 in the case of the calender roller speed remaining the same.

6. Process according to claims 2 to 5, characterised in that an advance of the withdrawal speed of 1:2.5 to 1:4 is adjusted.

## Revendications

1. Procédé de préparation de feuilles à partir d'un polyéthylène linéaire de très basse densité (VLDPE) par calandrage avec un postétirage suivant le dernier cylindre de calandre, caractérisé en ce que du polyéthylène linéaire d'une densité de 0,900 - 0,915 g/cm³ à l'état fondu, mais à une température entre 175 et 190°C, pour une basse charge de fente obtenue par un débit maximal de 90,3 kg par heure et par cm² de section transversale de feuille au dernier cylindre de calandre pour une épaisseur de feuille finale de 100 µm, de 135 kg par heure et cm² de section transversale de feuille au dernier cylindre de calandre pour une épaisseur de feuille finale de 300 µm et davantage et respectivement des valeurs de débit intermédiaires dans le cas de feuilles finales ayant une épaisseur comprise entre 100 et 300 µm, est traité pour former des feuilles qui, après abandon de la dernière fente de la calandre, sont extraites dans le postétirage à une vitesse augmentée au moins d'un facteur de 2 par rapport à la vitesse du dernier cylindre de calandre, l'avance de la vitesse d'extraction par rapport au dernier cylindre de calandre étant à augmenter pour une approche croissante du débit de ses limites supérieures.

2. Procédé suivant la revendication 1, caractérisé en ce qu'au moins la moitié de la réduction d'épaisseur de la feuille nécessaire pour l'obtention des épaisseurs de feuille finale souhaitées est obtenue par la mesure de l'avance de la vitesse d'extraction par rapport au dernier cylindre de calandre.

3. Procédé suivant la revendication 2, caractérisé en ce que, pour la préparation d'une feuille d'une épaisseur finale de 200 µm, on opère à un débit au maximum de 103 kg par heure et par cm² de section transversale de feuille au dernier cylindre de calandre, tout en ce qu'on augmente la productivité en augmentant l'avance de la vitesse d'extraction pour une vitesse équivalente des cylindres de calandre au-delà de la valeur de 1/2.

4. Procédé suivant la revendication 2, caractérisé en ce que, pour la préparation d'une feuille d'une épaisseur finale de 100 µm, on opère à un débit maximal de 80 kg par heure et cm² de section transversale de feuille au dernier cylindre de calandre, tout en ce qu'on augmente la productivité par augmentation de l'avance de la vitesse d'extraction pour une vitesse des cylindres de calandre équivalente au-delà d'une valeur de 1/2.

5. Procédé suivant la revendication 2, caractérisé en ce que, pour la préparation d'une feuille d'une épaisseur finale de 300 µm, on opère à un débit maximal de 120 kg par heure et cm² de section transversale de feuille au dernier cylindre de calandre, tout en ce qu'on augmente la productivité par augmentation de l'avance de la vitesse d'extraction pour une vitesse équivalente des cylindres de calandre au-delà de la valeur de 1/2.

6. Procédé suivant l'une des revendications 2 à 5, caractérisé en ce qu'une avance de la vitesse d'extraction de 1/2,5 à 1/4 est ajustée.
